# EUROPÄISCHE PATENTSCHRIFT

(11) **EP 3 504 689 B1**
(45) Veröffentlichungstag und Bekanntmachung des Hinweises auf die Patenterteilung: **20.07.2022**
(21) Anmeldenummer: 17793885.9
(22) Anmeldetag: 20.10.2017
(51) Int. Cl.: G07C 9/00, B60R 25/24

(54) **AUTHENTIFIZIERUNGSVERFAHREN UND AUTHENTIFIZIERUNGSANORDNUNG EINES KRAFTFAHRZEUGS**
AUTHENTICATION METHOD AND AUTHENTICATION ARRANGEMENT OF A MOTOR VEHICLE
PROCÉDÉ D'AUTHENTIFICATION ET AGENCEMENT D'AUTHENTIFICATION D'UN VÉHICULE AUTOMOBILE

(30) Priorität: 09.12.2016 DE 102016123998
(43) Veröffentlichungstag der Anmeldung: 03.07.2019
(73) Patentinhaber: HUF Hülsbeck & Fürst GmbH & Co. KG, 42551 Velbert (DE)
(72) Erfinder: OBERBECKMANN, Kai Magnus, 42105 Wuppertal (DE)
(74) Vertreter: Zenz Patentanwälte Partnerschaft mbB
(86) Internationale Anmeldenummer: PCT/EP2017/076893
(87) Internationale Veröffentlichungsnummer: WO 2018/103939

(56) Entgegenhaltungen:
- WO-A1-2015/074942
- DE-A1-102013 224 330
- DE-A1-102016 108 721
- US-A1- 2014 357 192

## Beschreibung

Die Erfindung betrifft ein Authentifizierungsverfahren zur Prüfung einer Berechtigung eines Bedieners zur Freischaltung einer Funktion eines Kraftahrzeugs. Die Erfindung betrifft weiterhin eine Authentifizierungsanordnung eines Kraftfahrzeugs.

Während einer langen Zeitspanne waren Kraftfahrzeuge mit einem mechanischen Schließsystem als einziger Maßnahme zur Zugangsbeschränkung versehen. Im Zuge der technischen Entwicklung wurden mechanisch ausgelöste Schließsysteme um elektrisch wirkende Berechtigungsprüfungssysteme ergänzt. Beispielsweise wurden Zugangs- und Berechtigungssysteme etabliert, deren Funktionalität auf der Funkkommunikation eines tragbaren ID-Gebers mit einem Steuerschaltkreis eines Kraftfahrzeugs basiert. Beispiele hierfür sind Schließsysteme, welche - je nach Anbieter und Funktionsumfang - oft als Keyless-Schließsysteme oder auch als Smart Entry beziehungsweise Smart-Entry-Keyless-Go-Systeme bezeichnet werden.

Aufgrund der zunehmenden Allgegenwärtigkeit von tragbaren elektronischen Endgeräten, insbesondere Smartphones, besteht zunehmend der Wunsch, derartige Geräte ebenfalls für die Berechtigungsprüfung im KFZ-Bereich nutzen zu können. Aufgrund der weiten Verbreitung beispielsweise in Smartphones, wird ein vielversprechender Ansatz für neuartige Authentifizierungssysteme in der Nutzung allgemein bekannter Spezifikationen für Funkkommunikation gesehen. Weit verbreitete Möglichkeiten für die Datenübertragung mittels Funktechnik werden durch die Bluetooth-Spezifikationen bereitgestellt.

Mit der Nutzung von Bluetooth-tauglichen Geräten geht allerdings oft der Nachteil einher, dass unter anderem aufgrund der hohen Ansprechbereitschaft und der weiten Verbreitung sowie der Offenheit für Software Dritter Kompromisse in der Geräte- und/oder Übertragungssicherheit eingegangen werden müssen. Auch besteht prinzipiell die Gefahr, dass sogenannte Man-in-the-Middle-Attacken, in diesem Zusammenhang oft auch als Relay-Station-Attacken bezeichnet, die Sicherheit und damit die Akzeptanz von Bluetooth-basierten Verfahren beeinträchtigen.

Die WO 2015/074942 A1 beschreibt ein Authentifizierungsverfahren für Kraftfahrzeuge, bei welchem sich ein Bediener mittels Bluetooth-Kommunikation und unter Verwendung biometrischer Sensoren gegenüber dem Kraftfahrzeug identifiziert.

Vor diesem Hintergrund stellt sich die Aufgabe, ein Authentifizierungsverfahren bereitzustellen, das auf der Verwendung von Bluetooth-Funkkommunikation basiert. Dabei sollen die Vorteile der bei Benutzung von Bluetooth erreichbaren Flexibilität und für einen Bediener komfortablen Bedienbarkeit weitestgehend beibehalten bleiben. Gleichzeitig wird an das gewünschte Authentifizierungsverfahren der Anspruch gestellt, dass die Gefahr einer Kompromittierung, insbesondere im Wege einer Relay-Station-Attacke, vermieden oder zumindest signifikant reduziert ist.

Die Aufgabe wird mit einem Authentifizierungsverfahren mit den Merkmalen des Anspruchs 1 sowie mit einer Authentifizierungsanordnung mit den Merkmalen des Anspruchs 11 gelöst.

Das erfindungsgemäße Authentifizierungsverfahren ermöglicht eine Prüfung einer Berechtigung eines Bedieners zur Freischaltung einer Funktion eines Kraftfahrzeugs. Eine derartige Funktion kann beispielsweise darin bestehen, dass der Zutritt zu dem Kraftfahrzeug gewährt wird. Eine andere Möglichkeit besteht darin, dass das Anlassen eines Motors des Kraftfahrzeugs gestattet wird. Es kann die Freischaltung von einer oder von mehreren Funktionen vorgesehen werden.

Im Rahmen des Authentifizierungsverfahrens ist die Nutzung einer Bluetooth-Low-Energy-Spezifikation vorgesehen. Bluetooth-Low-Energy, im Folgenden auch mit den Akronymen als BLE abgekürzt, stellt einen Teil einer Bluetooth-Spezifikation mit der Versionsnummer 4.0 oder größer dar. BLE bietet den Vorteil, dass ein geringer Energiebedarf erforderlich ist. Bei dem erfindungsgemäßen Authentifizierungsverfahren bietet die Verwendung von Bluetooth-Low-Energy den weiteren Vorteil, dass aufgrund der im Vergleich zu anderen Bluetooth-Verfahren geringeren Sendeleistung eine geringere Reichweite der Datenübertragung erreicht wird. Die bei BLE-Kommunikation typischerweise erreichten Reichweiten in der Größenordnung von 20 bis 30 Metern sind ausreichend groß, um eine komfortable Nutzung im Rahmen des beabsichtigten Zwecks des Authentifizierungsverfahrens zu gewährleisten. Gleichzeitig wird der Vorteil genutzt, dass im Vergleich zu Bluetooth-Kommunikationen mit deutlich größeren Reichweiten die Anfälligkeit für Man-in-the-Middle- beziehungsweise Relay-Station-Attacken deutlich kleiner ist.

Das erfindungsgemäße Verfahren sieht eine Kontaktaufnahme einer Bluetooth-Low-Energy-Schnittstelle des Kraftfahrzeugs (BLE-Schnittstelle) mit einem berechtigten Endgerät des Bedieners vor. Das berechtigte Endgerät ist für Bluetooth-Low-Energy-Kommunikation (BLE-Kommunikation) vorbereitet. Das bedeutet insbesondere, dass das Endgerät des Bedieners eine Implementation des den Bluetooth-Low-Energy betreffenden Teil eines Bluetooth-Standards der Version 4.0 oder später aufweist.

Es erfolgt erfindungsgemäß eine Übermittlung von Berechtigungsdaten von dem Endgerät an die BLE-Schnittstelle.

Der Begriff der BLE-Schnittstelle bezeichnet eine Ansammlung von Hard- und Softwarekomponenten, die erforderlich ist, eine BLE-Kommunikation mit einem externen, für BLE-Kommunikation vorbereiteten, Gerät durchzuführen. Beispielsweise kann die BLE-Schnittstelle in einer Ausführungsform zumindest eine Sende- und Empfangsantenne, ein Steuermodul zur BLE-Kommunikation umfassen, das entsprechend einer Bluetooth-Spezifikation für eine BLE-Kommunikation eingerichtet ist.

Weiterhin sieht das erfindungsgemäße Verfahren vor, dass nach der Übermittlung von Berechtigungsdaten eine Auswertung der Berechtigungsdaten mittels hinterlegter Referenzberechtigungsdaten zur Berechtigungsprüfung des Endgeräts erfolgt. Die Berechtigungsdaten, welche von dem Endgerät an die BLE-Schnittstelle übermittelt wurden, werden also unter Heranziehung der Referenzberechtigungsdaten daraufhin geprüft, ob das Endgerät berechtigt ist. Das bedeutet, dass anhand von Referenzberechtigungsdaten eine Prüfung vorgenommen wird, ob die BLE-Kommunikation mit einem berechtigten Endgerät durchgeführt wird. Die Berechtigungsdaten können dabei dem Endgerät inhärent sein, beispielsweise als eindeutige Nummer vergleichbar mit einer MAC-Adresse oder einem fest an das Gerät gekoppelten eindeutigen oder auch mehrdeutigen Identifizierungselement. Mit anderen Worten können die Berechtigungsdaten vollständig als Hardwarekennungen ausgebildet sein oder zumindest teilweise Hardwarekennungen aufweisen. Es kann aber auch vorgesehen sein, dass die Berechtigungsdaten softwareseitig auf dem Endgerät hinterlegt sind. Auch eine Kombination aus beidem kann vorgesehen sein, sodass die Berechtigungsdaten beispielsweise als Menge oder Kombination von Teilberechtigungsdaten umgesetzt sind.

In welcher Weise die Auswertung der Berechtigungsdaten implementiert ist, ist für die Umsetzung des erfindungsgemäßen Verfahrens unwesentlich und wird von den im Einzelfall vorliegenden Rahmenbedingungen abhängen wie beispielsweise dem gewünschten Maß an Systemsicherheit. Beispielsweise kann ein simpler Vergleich von Berechtigungsdaten mit Referenzberechtigungsdaten erfolgen. Es kann auch vorgesehen sein, dass aus Berechtigungsdaten abgeleitete Informationen mit Referenzberechtigungsdaten oder aus diesen abgeleiteten Informationen verglichen werden. Als nur ein Beispiel hierfür sei eine Ermittlung und ein Vergleich von Hash-Werten genannt, beispielsweise sowohl der Berechtigungsdaten als auch der Referenzberechtigungsdaten.

Als weiterer Verfahrensschritt des erfindungsgemäßen Authentifizierungsverfahrens wird ein biometrisches Merkmal des Bedieners erfasst. Für das Erfassen wird ein an dem Kraftfahrzeug unlösbar angeordneter Biometriesensor verwendet. Unlösbar bedeutet in diesem Kontext, dass der Biometriesensor nicht zerstörungsfrei von dem Kraftfahrzeug entfernt werden kann.

Als ein weiterer Schritt erfolgt nach dem Erfassen des biometrischen Merkmals eine Biometrieprüfung. Mittels der Biometrieprüfung wird geprüft, ob das erfasste biometrische Merkmal hinterlegten Referenzbiometriedaten des berechtigten Bedieners entspricht. Es wird also überprüft, ob das erfasste biometrische Merkmal des Bedieners als berechtigend anzusehen ist. Es kann zweckmäßig sein, dass die Biometrieprüfung von einer kraftfahrzeugseitigen Steuerschaltung vorgenommen wird. Alternativ oder zusätzlich kann aber auch - nach einer entsprechenden Übermittlung von Daten, die sich aus dem biometrischen Merkmal ergeben - die Auswertung durch eine externe Vorrichtung, beispielsweise durch das Endgerät, erfolgen. Von welcher Vorrichtung und auf welche Weise die Biometrieprüfung vorgenommen wird, ist für das Verfahren nicht wesentlich. Ähnlich wie bei der Berechtigungsprüfung wird die Implementation einzelfallabhängig in Abhängigkeit von den jeweiligen Rahmenbedingungen gewählt werden, beispielsweise abhängig von geforderten Sicherheitsstandards, Hardwarebeschränkungen oder ähnlichem. Beispielsweise können grafische Informationen miteinander verglichen werden. Es können aber auch aus einem biometrischen Merkmal abgeleitete Daten, beispielsweise in irgendeiner Weise abgeleitete Hashwerte, miteinander verglichen werden. Welches Verfahren hierfür verwendet wird, kann individuell gewählt werden und wird nicht zuletzt von dem geforderten Sicherheitsniveau abhängig sein.

Wesentlich ist, dass die Biometrieprüfung geeignet ist ein biometrisches Merkmal des berechtigten Bedieners (gegebenenfalls innerhalb des Rahmens einer zugelassenen Ungenauigkeit) als dem berechtigten Bediener zugehörig nachzuweisen. Als Folge dieser Biometrieprüfung ist nicht nur die Berechtigung des berechtigten Bedieners nachgewiesen, sondern auch die Anwesenheit des berechtigten Bedieners in unmittelbarer Umgebung des Kraftfahrzeugs.

Die Reihenfolge der Durchführung der Kontaktaufnahme und des Erfassens des biometrischen Merkmals kann dabei durch die Implementierung des Verfahrens vorgegeben werden, wobei die Reihenfolge je nach Bedürfnissen des Entwicklers umgesetzt werden kann. Aber auch eine beliebige Reihenfolge kann vorgesehen sein. Für die Funktionsfähigkeit des erfindungsgemäßen Verfahrens ist die Reihenfolge nicht wesentlich.

Schließlich erfolgt ein Freischalten der Funktion mittels der Steuerschaltung, nachdem
- die Auswertung der Berechtigungsdaten die Berechtigung des Endgeräts bestätigt hat und
- die Biometrieprüfung ergeben hat, dass das biometrische Merkmal den Referenzbiometriedaten entspricht.

Die Freischaltung der Funktion setzt also voraus, dass sowohl das Endgerät als berechtigt erkannt ist als auch die Person des berechtigten Bedieners identifiziert ist.

Durch die Kombination der Auswertung der Berechtigungsdaten mit der Biometrieprüfung ist nicht nur auf zweifache Weise und damit mit deutlich verringerter Fehlerquote sichergestellt, dass tatsächlich der berechtigte Bediener die Freischaltung der Funktion veranlassen möchte. Zusätzlich ist auch sichergestellt, dass der berechtigte Bediener sich in unmittelbarer Umgebung oder innerhalb des Kraftfahrzeugs befindet. Der durch Nutzung der BLE-Kommunikation bereits erreichte Sicherheitsgewinn wird dadurch noch weiter erhöht.

Es ist erfindungsgemäß vorgesehen, dass die Durchführung der einzelnen Verfahrensschritte des Authentifizierungsverfahrens von der kraftfahrzeugseitigen Steuerschaltung veranlasst werden. Das bedeutet nicht notwendigerweise, dass jeder Schritt von der Steuerschaltung selbst vorzunehmen ist. Jedoch ist zumindest erforderlich, dass die Steuerschaltung die Kontaktaufnahme der BLE-Schnittstelle mit dem Endgerät des Bedieners überwacht, und dass zumindest die Ergebnisse der Auswertung der Berechtigungsdaten und der Biometrieprüfung der Steuerschaltung insoweit bereitgestellt werden, dass eine Entscheidung über die Freischaltung der Funktion herbeigeführt werden kann.

In einer vorteilhaften Weiterbildung des Verfahrens ist vorgesehen, dass die Übermittlung von Berechtigungsdaten umfasst, dass eine Etablierung einer Bluetooth-Verbindung zwischen der BLE-Schnittstelle und dem Endgerät (Pairing) erfolgt. Nach dem Pairing veranlasst eine auf dem Endgerät installierte Software, dass ein auf dem Endgerät gespeicherter Berechtigungscode an die BLE-Schnittstelle gesendet wird. Es kann also vorgesehen sein, dass das Pairing zwischen der BLE-Schnittstelle und dem Endgerät erfolgt, so dass der über die Inquiry-Kommunikation hinausgehender Datentransfer möglich ist. Hiernach kann ein entsprechend eingerichtetes und berechtigtes Softwareprodukt veranlassen, dass ein identifizierender Code zum Nachweis der Berechtigung an die BLE-Schnittstelle übersandt wird. Das kraftfahrzeugseitige Steuergerät erhält somit die Möglichkeit zu der Auswertung des berechtigenden Codes zur Berechtigungsprüfung oder als Teil der Berechtigungsprüfung. Der Code kann dabei je nach Sicherheitsanforderungen nahezu beliebig einfach oder kompliziert gestaltet sein. Der Code kann ebenso beispielsweise als vierstelliger PIN-Code, wie auch beispielsweise als 128-Bit- oder stärkerer Schlüssel ausgebildet sein. Ein Vorteil der Übermittlung des Berechtigungscodes seitens einer Software nach dem Pairing des Endgeräts mit dem Kraftfahrzeug beziehungsweise den Steuervorrichtungen des Kraftfahrzeugs besteht darin, dass die Art und Weise der Gewährung einer Berechtigung in weiter Weise über die Software, beispielsweise eine App eines als Smartphone ausgebildeten Endgeräts, angepasst werden kann. Dies ermöglicht beispielsweise einem Hersteller des Kraftfahrzeugs oder einem Mietwagenverleiher, unterschiedlichen Bedienern in flexibler Weise und bedarfsweise auch nur temporär eine Berechtigung zuzuweisen und/oder zu entziehen.

Gemäß einer weiteren vorteilhaften Ausführungsform umfasst die Übermittlung von Berechtigungsdaten, dass vor dem Pairing eine Abfrage einer BD ADDR-Kennzeichnung des Endgeräts durch die BLE-Schnittstelle vorgenommen wird. Alternativ kann vorgesehen sein, dass kein Pairing erfolgt und dass die Abfrage einer BD_ADDR-Kennzeichnung des Endgeräts durch die BLE-Schnittstelle vorgenommen wird. Des Weiteren kann vorgesehen sein, dass die Auswertung der Berechtigungsdaten umfasst, dass die abgefragte BD_ADDR-Kennzeichnung mit einer vorgegebenen und kraftfahrzeugseitig gespeicherten Referenzkennzeichnung verglichen wird. Die Referenzkennzeichnung kann dabei als Bestandteil der Referenzberechtigungsdaten angesehen werden.

Die BD_ADDR-Kennzeichnung bezeichnet eine einmalig vergebene 48-Bit-Adresse. Der Bluetooth-Standard sieht vor, dass ein Auslesen der BD_ADDR-Kennzeichnung auch vor Vornehmen eines Pairings möglich ist. Bei Nutzen einer BD_ADDR-Kennzeichnung wird also in vorteilhafter Weise auf eine eindeutige Identifikation zurückgegriffen, welche untrennbar mit einem einzigen Gerät verbunden ist.

Es kann auch vorgesehen sein, dass eine wechselnde BD_ADDR-Kennzeichnung Verwendung findet, die im Zuge des Austauschs des Identity Resolving Key, auch IRK bezeichnet, dem Endgerät zugeordnet wird.

Bei Verwendung der BD_ADDR-Kennzeichnung im Rahmen der Berechtigungsprüfung kann vorgesehen sein, dass die Berechtigungsdaten ausschließlich aus der BD_ADDR-Kennzeichnung bestehen. Es kann aber auch vorgesehen sein, dass die Berechtigungsdaten sowohl die BD_ADDR-Kennzeichnung als auch weitere berechtigende Daten umfassen, welche zusätzlich zu der BD_ADDR-Kennzeichnung entweder vor dem Pairing und/oder nach dem Pairing der BLE-Schnittstelle übermittelt werden. Insbesondere können Ausgestaltungen eines erfindungsgemäßen Verfahrens vorgesehen sein, welche gänzlich ohne Pairing auskommen, während andere Ausgestaltungen des erfindungsgemäßen Verfahrens ein Pairing vorsehen, beispielsweise um die Sicherheit des Authentifizierungsverfahrens weiter zu erhöhen.

Alternativ oder ergänzend kann vorgesehen sein, dass ein Pairing nur im Rahmen eines ersten Verbindungsvorgangs der BLE-Schnittstelle mit dem Endgerät erfolgt. Nachdem ein Pairing einmal erfolgt ist, kann gemäß einer derartigen Ausführungsform vorgesehen sein, dass
- für unbegrenzt viele weitere Verbindungsaufnahmen oder begrenzt viele weitere Verbindungsaufnahmen und/oder
- für einen unbegrenzten Zeitraum oder einen begrenzten Zeitraum
der Aufbau einer sicheren Verbindung unter Rückgriff auf den bereits erfolgten Pairingvorgang ausreichend ist und anstelle eines im Rahmen jedes Verbindungsvorgangs erfolgenden Pairings vorgesehen ist. Gemäß einer Variante einer Implementierung kann vorgesehen sein, dass der Aufbau der sicheren Verbindung bereits für den erfolgreichen Berechtigungsnachweis des Endgeräts hinreichend ist. Beispielsweise kann hierfür auch oder ausschließlich auf die BD_ADDR-Kennzeichnung zurückgegriffen werden.

Erfindungsgemäß wird eine Bluetooth-Verbindung etabliert, nachdem das biometrische Merkmal erfasst wurde, wobei aus dem biometrischen Merkmal abgeleitete Daten zur Generierung eines Schlüssels verwendet werden.

Dabei setzt erfindungsgemäß die Bluetooth-Verbindung die Auswertung des Schlüssels durch das Endgerät voraus, wobei die Biometrieprüfung und/oder die Auswertung der Berechtigungsdaten den Aufbau der Verbindung umfassen.

Die Implementierung kann beispielsweise vorsehen, dass die Biometriedaten Eingangswerte liefern, mittels der das Steuergerät oder das Endgerät einen Connection Signature Resolving Key (CSRK) und/oder einen Identity Resolving Key (IRK) generieren können.

In einer Weiterbildung des Verfahrens kann vorgesehen sein, dass ein Pairing zwischen der BLE-Schnittstelle und dem Endgerät erfolgt, nachdem das biometrische Merkmal erfasst wurde. Dabei kann vorgesehen sein, dass aus dem biometrischen Merkmal abgeleitete Daten zur Generierung eines Schlüssels verwendet werden.

Insbesondere kann vorgesehen sein, dass das Pairing die Auswertung des Schlüssels durch das Endgerät voraussetzt. Mit anderen Worten kann vorgesehen sein, dass im Zuge des Pairings ein Schlüsselaustausch zwischen BLE-Schnittstelle und Endgerät erforderlich ist und dass die BLE-Funktionalität des Endgeräts derart implementiert ist, dass das Endgerät einen Schlüssel erwartet, welcher aus biometrischen Merkmalen des Endbenutzers generierbar ist. Selbstverständlich muss dieser Schlüssel oder Daten, aus denen dieser Schlüssel sich herleiten lässt, dem Endgerät vorbekannt sein, damit das Endgerät das Pairing durchführen oder ablehnen kann. Die Auswertung, ob das Pairing durchgeführt wird, erfolgt dabei auf Basis beziehungsweise unter Berücksichtigung des Schlüssels, der aus dem biometrischen Merkmal abgeleitet und generiert wurde.

In einer vorteilhaften Weiterbildung des Verfahrens umfasst die Auswertung der Berechtigungsdaten den Abschluss des Pairings. Mit anderen Worten interpretiert die kraftfahrzeugseitige Steuerschaltung die Tatsache, dass ein Pairing des Endgeräts mit der BLE-Schnittstelle vorliegt, als eine erfüllte Voraussetzung, um die Berechtigung des Bedieners anzunehmen. Ob das erfolgte Pairing dabei als notwendig oder gar als hinreichend aufgefasst wird, ist von der jeweiligen Implementierung abhängig. Eine derartig weitergebildete Verfahrensführung weist den beträchtlichen Vorteil auf, dass durch die Bluetooth-Spezifikation bereitgestellte Möglichkeiten genutzt werden, unter Verwendung von biometrischen Daten einen vorteilhaften Zugewinn an Sicherheit bei der Authentifizierung eines Bedieners an einem Kraftfahrzeug zu erhalten. Durch die Verwendung des biometrischen Merkmals wird dem Bediener dabei ein erhebliches Maß an Komfort bereitgestellt, während hinsichtlich der Sicherheit des Verfahrens keine Kompromisse eingegangen werden müssen. Der Komfortgewinn besteht dabei vor allem darin, dass die Berechtigung des Endgeräts und die Biometrieprüfung verfahrensmäßig und zeitlich zusammenfallen, sodass der Aufwand und die Wartezeit für den Bediener minimiert werden.

Gemäß einer anderen vorteilhaften Weiterbildung kann alternativ oder zusätzlich der Abstand des Endgeräts von der BLE-Schnittstelle ermittelt werden. Das Freischalten der Funktion kann die Erfüllung der Anforderung voraussetzen, dass der Abstand des Endgeräts von der BLE-Schnittstelle einen vorgegebenen und kraftfahrzeugseitig gespeicherten Wert nicht überschreitet. Der Begriff des Abstands ist hierbei nicht nur im Sinne einer quantitativen exakten Bestimmung zu verstehen. Vielmehr ist wesentlich, dass im Rahmen der Funkkommunikation auf Grundlage des Bluetooth-Low-Energy-Teils des Bluetooth-Standards eine Abschätzung des Abstands vorgenommen wird. Insbesondere in Kombination mit anderen Bestandteilen des erfindungsgemäßen Verfahrens oder seiner Weiterbildungen, insbesondere der zuvor erläuterten und die Sicherheit betreffenden verfahrensschritte, kann durch das Vorsehen eines maximal zulässigen Abstands ein zusätzlicher Gewinn an Sicherheit erreicht werden.

Im Zusammenhang mit der Nutzung des BLE-Teils der Bluetooth-Spezifikation kann insbesondere eine "Inquiry-Result-with-RSSI"-Abfrage zur Ermittlung eines RSSI-Werts des Endgeräts genutzt werden. Diese Abfrage weist den Vorteil auf, durch Bluetooth-Spezifikationen beschrieben zu sein, sodass ihre Implementierung mit vergleichsweise geringem Aufwand möglich ist. Im Anschluss an die Abfrage kann der ermittelte RSSI-Wert beispielsweise kraftfahrzeugseitig mit einem hinterlegten RSSI-Schwellwert verglichen werden. Dadurch soll nicht ausgeschlossen sein, dass zusätzlich noch weitere, den Abstand betreffende Verfahren vorgenommen werden wie beispielsweise andere Arten der Signalstärkemessung, Bestimmung von Frequenzverschiebungen oder ähnlichem.

Um die zeitliche Abfolge der Verfahrensschritte in kompakter Weise zu gestalten, kann das Erfassen des biometrischen Merkmals als Auslöser für die Kontaktaufnahme der BLE-Schnittstelle mit dem Endgerät genutzt werden. Beispielsweise kann in dem Fall, dass es sich bei dem biometrischen Merkmal um einen Fingerabdruck handelt, ein Betätigen eines entsprechend an dem Kraftfahrzeug angebrachten Fingerabdrucksensors unmittelbar nach oder in einem vorgesehenen Zeitabstand nach dem Betätigen des Fingerabdrucksensors ein Abscannen der Umgebung nach vorhandenen Endgeräten veranlassen.

Als weitere die Sicherheit des Authentifizierungsverfahrens verbessernde Maßnahme kann eine Maximalkarenzzeit festgelegt sein, die zwischen Kontaktaufnahme der BLE-Schnittstelle mit dem Endgerät und Erfassen des biometrischen Merkmals nicht überschritten werden darf. Die vorgesehene Maximalkarenzzeit ist dabei unabhängig von der Reihenfolge aus Kontaktausnahme und Erfassen des biometrischen Merkmals zu verstehen, wobei die Reihenfolge abhängig von der gewählten Implementierung des Verfahrens ist. In einem Fall beispielsweise, in dem permanent, ohne Triggern durch Betätigen des Biometriesensors, ein Abscannen der Umgebung nach Endgeräten und Veranlassen einer Kontaktaufnahme erfolgt, kann durch entsprechendes Bereitstellen eines begrenzten Zeitfensters zur Betätigung des Biometriesensors erreicht werden, dass die Gefahr von Manipulationen an dem Gesamtsystem reduziert wird.

Als Biometriesensor können insbesondere ein Fingerabdrucksensor und/oder ein Venenscanner vorgesehen sein. Der Sensor kann auch mehrere Sensorteile umfassen, die miteinander gekoppelt sind. Beispielsweise kann ein Netzwerk aus miteinander gekoppeltem Fingerabdrucksensorteil und Venenscannersensorteil vorgesehen sein. Ein Fingerabdrucksensor weist den Vorteil eines niedrigen Preises und einer weiten Verfügbarkeit auf. Ein Venenscanner weist neben der weitgehenden Fälschungssicherheit des Venenmusters des berechtigten Bedieners gegenüber dem Fingerabdrucksensor den weiteren Vorteil auf, dass eine Prüfung des Bedieners auf einen vorhandenen Pulses hin vorgenommen werden kann, wodurch ein zusätzlicher Sicherheitsgewinn bewirkt wird.

Als Endgerät kann insbesondere ein Smartphone vorgesehen sein.

Ein weiterer Gedanke der Erfindung betrifft eine Authentifizierungsanordnung eines Kraftfahrzeugs gemäß Anspruch 11.

Die bei Bereitstellung der Authentifizierungsanordnung erreichten Vorteile entsprechen insoweit in analoger Weise den Überlegungen zu dem erfindungsgemäßen Verfahren oder zu seinen Weiterbildungen.

Weitere Einzelheiten, Merkmale und Vorteile des Gegenstands der Erfindung ergeben sich aus der nachfolgenden Beschreibung in Zusammenhang mit den Zeichnungen, in denen beispielhaft Ausführungsformen der Erfindung dargestellt sind.

Es versteht sich, dass die vorstehend wie auch die nachfolgend erläuterten Merkmale nicht nur in der jeweils angegebenen Kombination, sondern auch in anderen Kombinationen miteinander oder in Alleinstellung verwendbar sind.

Es zeigen:
Fig. 1: Eine beispielhafte Ausführungsform für ein Authentifizierungsverfahren;
Fig. 2: Eine weitere beispielhafte Ausführungsform für ein erfindungsgemäßes Authentifizierungsverfahren;
Fig. 3:Eine beispielhafte Ausführungsform für eine Authentifizierungsanordnung eines Kraftfahrzeugs.

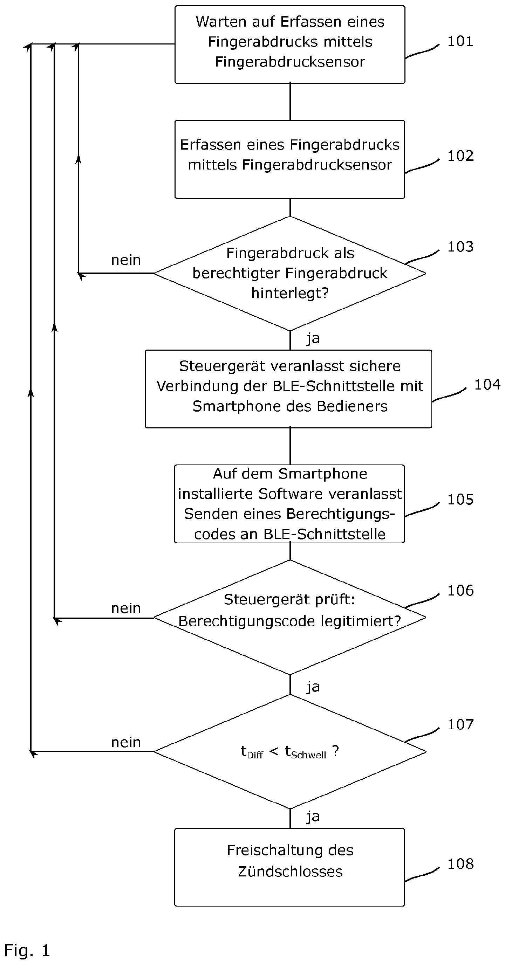

Das in Fig. 1 dargestellte Flussdiagramm zeigt schematisch eine Folge von Verfahrensschritten. Die Folge von Verfahrensschritten repräsentiert ein Ausführungsbeispiel eines erfindungsgemäßen Authentifizierungsverfahrens gemäß einer möglichen Implementierung.

In einem ersten Schritt 101 wartet ein als Fingerabdrucksensor ausgebildeter Biometriesensor auf das Auflegen eines Fingerabdrucks zum Zweck des Erfassens. Wenn ein berechtigter Bediener sich dem Kraftfahrzeug nähert kann der Bediener eine Sequenz von Verfahrensschritten zur Freischaltung einer Funktion, beispielsweise zur Freigabe des Zündschlosses des Kraftfahrzeugs auslösen, indem er seinen Finger auf den Fingerabdrucksensor legt und daraufhin der Fingerabdrucksensor den Fingerabdruck erfasst (Schritt 102). Nach dem Erfassen des Fingerabdrucks wird im Rahmen der Biometrieprüfung geprüft, ob der Fingerabdruck als berechtigter Fingerabdruck hinterlegt ist (Schritt 103). Die Prüfung wird in dem dargestellten Ausführungsbeispiel mittels des kraftfahrzeugseitigen Steuergeräts durchgeführt. Das bedeutet, dass im Rahmen einer entsprechenden Konfiguration des Kraftfahrzeugs beziehungsweise des Steuergeräts des Kraftfahrzeugs im Vorfeld einer gewünschten Nutzungsgewährung eine Hinterlegung der Fingerabdrücke der berechtigten Bediener als Referenzbiometriedaten vorgenommen sein muss. Nach Erfassen des Fingerabdrucks des berechtigten Bedieners resultiert die Biometrieprüfung in dem Ergebnis, dass der erfasste Fingerabdruck den Referenzbiometriedaten entspricht, dass also im Rahmen der geforderten Erkennungsgenauigkeit die Identität des Fingerabdrucks mit einem Referenzfingerabdruck des berechtigten Bedieners festgestellt werden konnte. Dem Steuergerät dient das Positivergebnis der Biometrieprüfung als Auslöser, eine Verbindung der BLE-Schnittstelle mit einem als Smartphone ausgebildeten Endgerät des Bedieners zu veranlassen (Schritt 104). Es wird also zunächst eine Kontaktaufnahme mit dem Smartphone vorgenommen, wobei für die Kontaktaufnahme eine BLE-Schnittstelle des Kraftfahrzeuges verwendet wird. Unter der Bedingung, dass das Endgerät des Bedieners für eine BLE-Kommunikation vorbereitet ist, wird zunächst im Rahmen einer Inquiry-Kommunikation der Verbindungsaufbau zwischen der BLE-Schnittstelle und dem Smartphone vorbereitet und sodann, immer noch im Rahmen des Schritts 104, abgeschlossen. Hierfür wird im Rahmen dieses Ausführungsbeispiels vorausgesetzt, dass im Zuge einer erstmaligen Inbetriebnahme ein Anlernvorgang durchgeführt wurde, der ein einmaliges Pairing der BLE-Schnittstelle mit dem Smartphone umfasste. Aufgrund dieses erfolgten Pairings ist nunmehr der Aufbau einer gesicherten Verbindung ohne gesondertes Pairing möglich. Indem der Verbindungsaufbau abgeschlossen wurde, sind die Voraussetzungen für einen umfangreichen Datenverkehr zwischen Smartphone und BLE-Schnittstelle geschaffen. In einem Verfahrensschritt 105 wird mittels von auf dem Smartphone installierter Software ein Senden eines Berechtigungscodes an die BLE-Schnittstelle veranlasst. In einer Ausgestaltung kann dabei vorgesehen sein, dass der Benutzer proaktiv eine App auf dem Smartphone starten muss und das Senden des Berechtigungscodes aktiv initiieren muss. Es kann aber gleichermaßen vorgesehen sein, dass das Senden von der App weitgehend automatisch, beispielsweise unter Integration in das Betriebssystem des Smartphones, vorgenommen wird.

Der Berechtigungscode wird von der BLE-Schnittstelle empfangen und stellt im Rahmen dieser Ausführungsform die Gesamtheit der erwarteten Berechtigungsdaten dar. Gleichwohl kann im Rahmen anderer Ausführungsformen auch das Vorliegen von weiteren Bestandteilen von Berechtigungsdaten erwartet werden, die beispielsweise weitere Berechtigungscodes umfassen können. Nach Empfangen des Berechtigungscodes durch die BLE-Schnittstelle prüft das mit der BLE-Schnittstelle gekoppelte Steuergerät anhand hinterlegter Referenzberechtigungsdaten, ob der Berechtigungscode legitimiert ist (Schritt 106). In der dargestellten Ausführungsform wird dies durch Vergleichen des Berechtigungscodes mit einem in Klartext abgelegten Referenzberechtigungscode verglichen. Alternativ kann aber auch vorgesehen sein, dass aus Gründen der Sicherheit der Referenzberechtigungscode nur in verschlüsselter oder umgewandelter Weise, insbesondere in Gestalt eines Hashwerts des Referenzberechtigungscodes, kraftfahrzeugseitig gespeichert ist. Hierauf kommt es für die erfolgreiche Durchführung des Verfahrens aber nicht an; wesentlich ist vielmehr, dass das Steuergerät in der Lage ist zu prüfen, ob der Berechtigungscode, der zuvor auf dem Endgerät hinterlegt wurde, der kraftfahrzeugseitigen Infrastruktur bereits vor Kontaktaufnahme und vor dem Aufbau der sicheren Verbindung für das Steuergerät als berechtigend erkennbar sein durfte.

Im Rahmen des dargestellten Ausführungsbeispiels wird als zusätzliches Sicherheitsmerkmal geprüft, ob zwischen Erfassen des Fingerabdrucks und der Kontaktaufnahme der BLE-Schnittstelle mit dem Endgerät eine Zeitdauer t_{Diff} unterhalb einer Schwellzeitdauer t_{Schwell} vergangen ist. Durch dieses zusätzliche Sicherheitsmerkmal kann zur Sicherstellung beigetragen werden, dass mit hoher Wahrscheinlichkeit das mittels Verbindungsherstellung mit der BLE-Schnittstelle verbundene Smartphone von derselben Person mitgeführt wird, welche den berechtigenden Fingerabdruck auf den Fingerabdrucksensor gelegt hat. In dem Fall, dass auch diese Bedingung erfüllt ist, initiiert das Steuergerät in einem abschließenden Schritt 108 die Freischaltung des Zündschlosses.

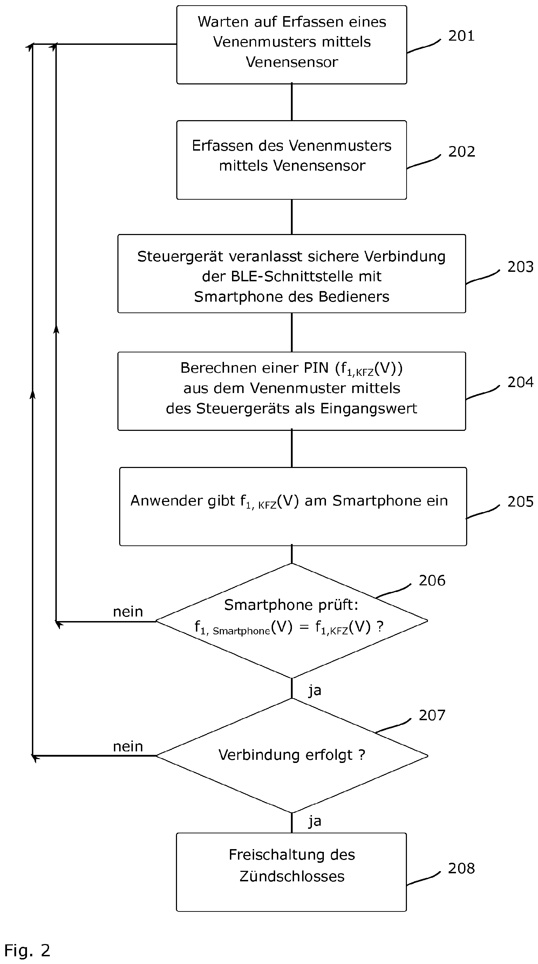

Eine beispielhafte Ausführungsform eines erfindungsgemäßen Verfahrens ist Fig. 2 zu entnehmen. In einem ersten Schritt erwartet der Biometriesensor das Annähern eines biometrischen Merkmals. In der Ausführungsform der Fig. 2 handelt es sich bei dem Biometriesensor um einen Venensensor, der die Erfassung eines Venenmusters als biometrisches Merkmal erwartet. In einem Fall, in dem sich ein Bediener dem Venensensor hinreichend nähert, erfolgt im Rahmen des Schritts 202 ein Erfassen des Venenmusters. Das Erfassen des Venenmusters nimmt das Steuergerät zum Anlass, eine Verbindungsherstellung der mit dem Steuergerät gekoppelten BLE-Schnittstelle mit dem Smartphone zu initiieren. In dem Fall, in dem ein Smartphone des Bedieners in Reichweite der BLE-Schnittstelle erkannt wird, erfolgt nach zunächst eine erste Kontaktaufnahme zwischen BLE-Schnittstelle und Smartphone im Rahmen einer Inquiry-Kommunikation. Sodann veranlasst das kraftfahrzeugseitige Steuergerät ein Berechnen einer PIN f_{1, KFZ} (V), wozu das Venenmuster als Eingangswert genutzt wird. f_{1, KFZ} (V) stellt eine geeignete Funktion dar, welche auf Basis von durch den Venenscanner ermittelten Daten reproduzierbar eine wunschgemäß sichere Abbildung auf eine PIN erlaubt, wobei die PIN in diesem Fall als Ziffernfolge ausgebbar ist. Die PIN wird in einem Anzeigemodul des Kraftfahrzeugs angezeigt und sodann in einem Schritt 205 durch den Bediener in sein Smartphone eingegeben. Im Schritt 206 wird durch ein Softwaremodul des Smartphones geprüft, ob die ermittelte PIN dem durch das Softwaremodul erwarteten Ergebnis entspricht. Nur in dem Fall, dass die PIN dem erwarteten Ergebnis entspricht, veranlasst das Softwaremodul des Bedieners den Verbindungsaufbau. Auch bei diesem Ausführungsbeispiel wurde im Zuge einer erstmaligen Inbetriebnahme ein Anlernvorgang durchgeführt, der ein einmaliges Pairing der BLE-Schnittstelle mit dem Smartphone umfasste. Wenn in einem Schritt 207 durch das Steuergerät festgestellt wird, dass der Verbindungsaufbau beendet wird, interpretiert das Steuergerät den erfolgten Verbindungsaufbau als erfolgreiche Auswertung der Berechtigungsdaten sowie der Biometrieprüfung, da Venenmuster und aus dem Venenmuster berechnete PIN mit auf dem Smartphone entsprechend hinterlegten Daten übereinstimmen. Schlussendlich erfolgt im Schritt 208 das Freischalten des Zündschlosses.

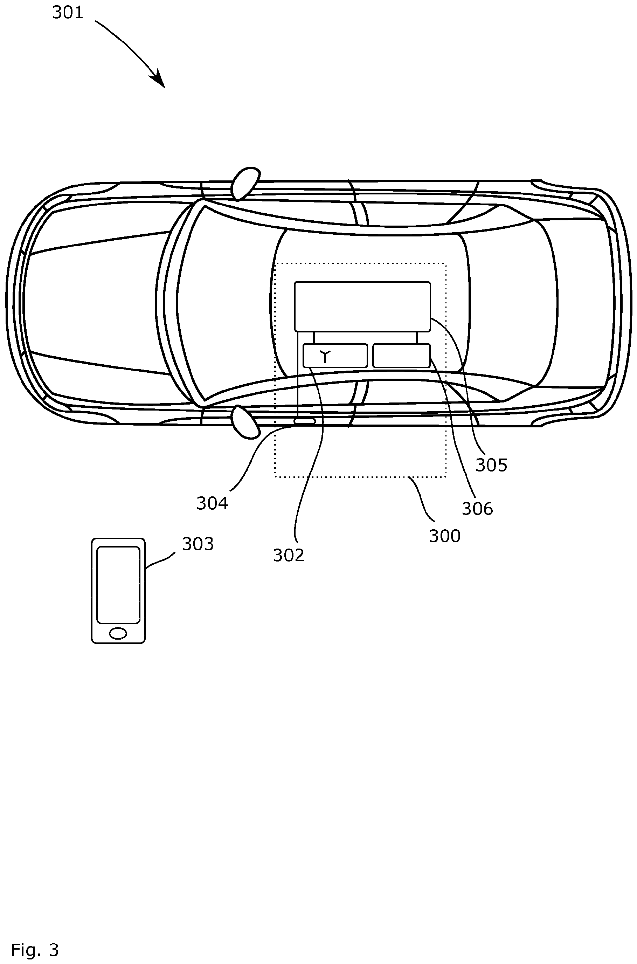

Fig. 3 zeigt schematisch eine beispielhafte Ausführungsform einer Authentifizierungsordnung 300 eines Kraftfahrzeugs 301. Die Authentifizierungsanordnung 300 des Kraftfahrzeugs 301 weist eine Bluetooth-Low-Energy-Schnittstelle 302 auf, welche an einer kraftfahrzeugseitigen Steuerschaltung 305 gekoppelt ist. Weiterhin ist ein Biometriesensor 304 mit der Steuerschaltung 305 gekoppelt und unlösbar mit dem Kraftfahrzeug 301 verbunden. Mittels der Bluetooth-Low-Energy-Schnittstelle 302 kann mit einem für BLE-Kommunikation vorbereiteten Endgerät 303 eines Bedieners kommuniziert werden. Um die Durchführung eines entsprechenden Authentifizierungsverfahrens zu erlauben, ist die Steuerschaltung 305 eingerichtet, entsprechende Abfragen und Berechnungen vorzunehmen. Die hierfür erforderlichen Computerprogrammmittel sowie ebenfalls erforderlichen Referenzdaten sind auf einem Speichermittel 306 angeordnet, welches mit der Steuerschaltung gekoppelt ist.

## Patentansprüche

1. Authentifizierungsverfahren zur Prüfung einer Berechtigung eines Bedieners zur Freischaltung einer Funktion eines Kraftfahrzeugs,
wobei eine kraftfahrzeugseitige Steuerschaltung die folgenden Schritte veranlasst:
- Kontaktaufnahme einer Bluetooth-Low-Energy-Schnittstelle, abgekürzt: BLE-Schnittstelle, des Kraftfahrzeugs mit einem berechtigten Endgerät des Bedieners, das für Bluetooth-Low-Energy-Kommunikation, abgekürzt: BLE-Kommunikation, vorbereitet ist;
- Übermittlung von Berechtigungsdaten von dem Endgerät an die BLE-Schnittstelle;
- Auswertung der Berechtigungsdaten mittels hinterlegter Referenzberechtigungsdaten zur Berechtigungsprüfung des Endgeräts;
- Erfassen eines biometrischen Merkmals des Bedieners mittels eines an dem Kraftfahrzeug unlösbar angeordneten Biometriesensors;
- Biometrieprüfung, ob das erfasste biometrische Merkmal hinterlegten Referenzbiometriedaten des berechtigten Bedieners entspricht;
- Freischalten der Funktion mittels der Steuerschaltung, nachdem
o die Auswertung der Berechtigungsdaten die Berechtigung des Endgeräts bestätigt hat und
o die Biometrieprüfung ergeben hat, dass das biometrische Merkmal den Referenzbiometriedaten entspricht,
wobei eine Bluetooth-Verbindung zwischen der BLE-Schnittstelle und dem Endgerät etabliert wird, nachdem das biometrische Merkmal erfasst wurde, wobei aus dem biometrischen Merkmal abgeleitete Daten zur Generierung eines Schlüssels verwendet werden, wobei die Bluetooth-Verbindung die Auswertung des Schlüssels durch das Endgerät voraussetzt, wobei die Biometrieprüfung und/oder die Auswertung der Berechtigungsdaten den Aufbau der Verbindung umfassen.

2. Authentifizierungsverfahren nach Anspruch 1, **dadurch gekennzeichnet, dass** ein Pairing zwischen der BLE-Schnittstelle und dem Endgerät etabliert wird, nachdem das biometrische Merkmal erfasst wurde, wobei aus dem biometrischen Merkmal abgeleitete Daten zur Generierung eines Schlüssels verwendet werden, wobei das Pairing die Auswertung des Schlüssels durch das Endgerät voraussetzt, wobei die Biometrieprüfung und/oder die Auswertung der Berechtigungsdaten den Abschluss des Pairings umfassen.

3. Authentifizierungsverfahren nach Anspruch 1 oder nach Anspruch 2, **dadurch gekennzeichnet,**
**dass** die Übermittlung von Berechtigungsdaten umfasst, dass nach einem Pairing zwischen der BLE-Schnittstelle und dem Endgerät eine auf dem Endgerät installierte Software veranlasst, einen auf dem Endgerät gespeicherten Berechtigungscode an die BLE-Schnittstelle zu senden.

4. Authentifizierungsverfahren nach einem der vorhergehenden Ansprüche, **dadurch gekennzeichnet,**
**dass** die Übermittlung von Berechtigungsdaten umfasst, dass vor einem Pairing eine Abfrage einer BD_ADDR-Kennzeichnung des Endgeräts durch die BLE-Schnittstelle vorgenommen wird, und
**dass** die Auswertung der Berechtigungsdaten umfasst, dass die abgefragte BD ADDR-Kennzeichnung mit einer vorgegebenen und kraftfahrzeugseitig gespeicherten Referenz-Kennzeichnung verglichen wird, die von den Referenzberechtigungsdaten umfasst ist.

5. Authentifizierungsverfahren nach einem der vorhergehenden Ansprüche, **dadurch gekennzeichnet, dass** eine Ermittlung des Abstands des Endgeräts von der BLE-Schnittstelle erfolgt, und dass das Freischalten der Funktion voraussetzt, dass der Abstand einen vorgegebenen und kraftfahrzeugseitig gespeicherten Wert nicht überschreitet.

6. Authentifizierungsverfahren nach Anspruch 5, **dadurch gekennzeichnet, dass** die Ermittlung des Abstands ein Inquiry-Result-with-RSSI zur Ermittlung eines RSSI-Werts des Endgeräts sowie ein anschließendes kraftfahrzeugseitig durchgeführtes Vergleichen des RSSI-Werts mit einem hinterlegten RSSI-Schwellwert umfasst.

7. Authentifizierungsverfahren nach einem der vorhergehenden Ansprüche, **dadurch gekennzeichnet, dass** das Erfassen des biometrischen Merkmals die Kontaktaufnahme der BLE-Schnittstelle mit dem Endgerät auslöst.

8. Authentifizierungsverfahren nach einem der vorhergehenden Ansprüche, **dadurch gekennzeichnet, dass** das Freischalten der Funktion voraussetzt, dass zusätzlich zwischen der Kontaktaufnahme der BLE-Schnittstelle mit dem Endgerät und dem Erfassen des biometrischen Merkmals eine Maximalkarenzzeit nicht überschritten wurde.

9. Authentifizierungsverfahren nach einem der vorhergehenden Ansprüche, **dadurch gekennzeichnet, dass** der Biometriesensor ein Fingerabdrucksensor und/oder ein Venenscanner ist.

10. Authentifizierungsverfahren nach einem der vorhergehenden Ansprüche, **dadurch gekennzeichnet, dass** das Endgerät ein Smartphone ist.

11. Authentifizierungsanordnung (300) eines Kraftfahrzeugs (301), aufweisend:
- eine Bluetooth-Low-Energy-Schnittstelle (BLE-Schnittstelle) (302), die für eine Kontaktaufnahme mit einem für Bluetooth-Low-Energy-Kommunikation (BLE-Kommunikation) vorbereiteten Endgerät (303) eines Bedieners vorbereitet ist,
- einen Biometriesensor (304),
- eine Steuerschaltung (305), die mit der BLE-Schnittstelle (302) und dem Biometriesensor (304) gekoppelt ist,
- ein mit der Steuerschaltung (305) gekoppeltes Speichermittel (306), auf dem zumindest Referenzdaten zu einem mit dem Biometriesensor (304) erfassbaren biometrischen Merkmal eines berechtigten Bedieners hinterlegt sind,
wobei die Steuerschaltung (305) eingerichtet ist, ein Verfahren gemäß einem der vorhergehenden Ansprüche durchzuführen.

## Claims

1. Authentication procedure for checking an operator's authorisation to enable a function of a motor vehicle,
wherein a control circuit on the motor vehicle side initiates the following steps:
- Contacting a Bluetooth Low Energy Interface, abbreviated: BLE interface, of the motor vehicle with an authorised device of the operator that is prepared for Bluetooth Low Energy Communication, abbreviated: BLE communication;
- Transmission of authorisation data from the device to the BLE interface;
- Evaluation of the authorisation data by means of stored reference authorisation data for the authorisation check of the device's authorisation;
- Capturing of a biometric characteristic of the operator by means of a biometric sensor which is non-detachably arranged on the motor vehicle;
- Biometrics check whether the captured biometric characteristic corresponds to stored reference biometric data of the authorised operator;
- Enable the function by means of the control circuit after
o the evaluation of the authorisation data has confirmed the authorisation of the device and
o the biometric verification has shown that the biometric characteristic corresponds to the reference biometric data,
wherein
a Bluetooth connection is established between the BLE interface and the device after the biometric characteristic has been captured, wherein data derived from the biometric characteristic is used to generate a key, wherein the Bluetooth connection requires the evaluation of the key by the device, wherein the biometrics check and/or the evaluation of the authorisation data comprise the establishment of the connection.

2. Authentication method according to claim 1, **characterized in that** a pairing is established between the BLE interface and the device after the biometric characteristic has been captured, wherein data derived from the biometric characteristic is used to generate a key, wherein the pairing requires the evaluation of the key by the device, wherein the biometrics check and/or the evaluation of the credential data comprise the completion of the pairing.

3. Authentication method according to claim 1 or according to claim 2,
**characterised in that** the transmission of authorisation data comprises that after pairing between the BLE interface and the device, software installed on the device causes an authorisation code stored on the device to be sent to the BLE interface.

4. Authentication method according to any one of the preceding claims,
**characterized in that** the transmission of authorisation data comprises that a query of a BD_ADDR identification of the device is made by the BLE interface before pairing, and
**in that** the evaluation of the authorisation data comprises comparing the queried BD_ADDR identification with a predefined reference identification stored on the motor vehicle side, which is comprised by the reference authorisation data.

5. Authentication method according to any one of the preceding claims, **characterised in that** a determination of the distance of the device from the BLE interface takes place, and **in that** the enabling of the function requires that the distance does not exceed a predetermined value stored on the vehicle side.

6. Authentication method according to claim 5, **characterised in that** the determination of the distance comprises an inquiry-result-with-RSSI to determine an RSSI value of the device and a subsequent comparison of the RSSI value with a stored RSSI threshold value carried out by the motor vehicle.

7. Authentication method according to any one of the preceding claims, **characterised in that** the detection of the biometric characteristic triggers the contacting of the BLE interface with the device.

8. Authentication method according to any one of the preceding claims, **characterised in that** the enabling of the function requires that, in addition, between the contacting of the BLE interface with the device and the capture of the biometric characteristic, a maximum waiting time has not been exceeded.

9. Authentication method according to any one of the preceding claims, **characterised in that** the biometric sensor is a fingerprint sensor and/or a vein scanner.

10. Authentication method according to any one of the preceding claims, **characterised in that** the device is a smartphone.

11. Authentication arrangement (300) of a motor vehicle (301), comprising:
- a Bluetooth Low Energy (BLE) interface (302) prepared for contacting an operator's device (303) prepared for Bluetooth Low Energy (BLE) communication,
- a biometric sensor (304),
- a control circuit (305) coupled to the BLE interface (302) and the biometrics sensor (304),
- a memory means (306) coupled to the control circuit (305), on which at least reference data on a biometric characteristic of an authorised operator that can be detected with the biometric sensor (304) is stored,
wherein the control circuit (305) is arranged to perform a method according to any one of the preceding claims.

## Revendications

1. Procédé d'authentification pour vérifier l'autorisation d'un opérateur à activer une fonction d'un véhicule automobile
dans lequel un circuit de commande côté véhicule automobile provoque les étapes suivantes :
- Pris de contact d'une interface Bluetooth à faible énergie, en abrégé : interface BLE, du véhicule automobile avec un terminal autorisé de l'opérateur qui est préparé pour la communication Bluetooth à faible énergie, en abrégé : communication BLE ;
- Transmission des données d'autorisation du terminal à l'interface BLE ;
- Evaluation des données d'autorisation au moyen de données d'autorisation de référence enregistrées pour le contrôle des autorisations du terminal ;
- Saisir d'une caractéristique biométrique de l'opérateur au moyen d'un capteur biométrique disposé de manière inamovible sur le véhicule automobile ;
- Contrôle biométrique pour vérifier si la caractéristique biométrique saisie correspond à des données biométriques de référence enregistrées de l'opérateur autorisé ;
- Activation de la fonction au moyen du circuit de commande après que
o l'évaluation des données d'autorisation a confirmé l'autorisation du terminal, et que
o le contrôle biométrique a montré que la caractéristique biométrique correspond aux données biométriques de référence,
dans lequel
une liaison Bluetooth est établie entre l'interface BLE et le terminal après que la caractéristique biométrique a été saisie, des données dérivées de la caractéristique biométrique étant utilisées pour générer une clé, la liaison Bluetooth supposant l'évaluation de la clé par le terminal, le contrôle biométrique et/ou l'évaluation des données d'autorisation comprenant l'établissement de la liaison.

2. Procédé d'authentification selon la revendication 1, **caractérisé en ce qu'**un appairage est établi entre l'interface BLE et le terminal après que la caractéristique biométrique a été détectée, des données dérivées de la caractéristique biométrique étant utilisées pour générer une clé, l'appairage supposant l'évaluation de la clé par le terminal, le contrôle biométrique et/ou l'évaluation des données d'autorisation comprenant la fin de l'appairage.

3. Procédé d'authentification selon la revendication 1 ou selon la revendication 2, **caractérisé en ce que**
**que** la transmission de données d'autorisation comprend qu'après un appairage entre l'interface BLE et le terminal, un logiciel installé sur le terminal provoque l'envoi d'un code d'autorisation enregistré sur le terminal à l'interface BLE.

4. Procédé d'authentification selon l'une quelconque des revendications précédentes, **caractérisé**
**en ce que** la transmission de données d'autorisation comprend qu'avant un appairage, une interrogation d'une caractérisation BD_ADDR du terminal est effectuée par l'interface BLE, et
**en ce que** l'évaluation des données d'autorisation comprend que l'identification BD_ADDR interrogée est comparée à une identification de référence prédéfinie et mémorisée côté véhicule automobile, qui est comprise dans les données d'autorisation de référence.

5. Procédé d'authentification selon l'une quelconque des revendications précédentes, **caractérisé en ce qu'**une détermination de la distance entre le terminal et l'interface BLE est effectuée, et **en ce que** l'activation de la fonction suppose que la distance ne dépasse pas une valeur prédéfinie et mémorisée par le véhicule automobile.

6. Procédé d'authentification selon la revendication 5, **caractérisé en ce que** la détermination de la distance comprend d'Inquiry-Result-with-RSSI pour déterminer une valeur RSSI du terminal ainsi qu'une comparaison subséquente de la valeur RSSI, effectuée par le véhicule automobile, avec une valeur seuil RSSI mémorisée.

7. Procédé d'authentification selon l'une quelconque des revendications précédentes, **caractérisé en ce que** la détection de la caractéristique biométrique déclenche la mise en contact de l'interface BLE avec le terminal.

8. Procédé d'authentification selon l'une quelconque des revendications précédentes, **caractérisé en ce que** l'activation de la fonction suppose qu'en outre, entre la mise en contact de l'interface BLE avec le terminal et l'acquisition de la caractéristique biométrique, un temps de carence maximal n'a pas été dépassé.

9. Procédé d'authentification selon l'une quelconque des revendications précédentes, **caractérisé en ce que** le capteur biométrique est un capteur d'empreintes digitales et/ou un scanner veineux.

10. Procédé d'authentification selon l'une quelconque des revendications précédentes, **caractérisé en ce que** le terminal est un smartphone.

11. Ensemble d'authentification (300) d'un véhicule automobile (301), comprenant :
- une interface Bluetooth à faible énergie (BLE) (302) préparée pour une prise de contact avec un terminal (303) d'un opérateur préparé pour une communication Bluetooth à faible énergie (BLE),
- un capteur biométrique (304),
- un circuit de commande (305) couplé à l'interface BLE (302) et au capteur biométrique (304),
- un moyen de mémoire (306) couplé au circuit de commande (305), sur lequel sont déposées au moins des données de référence relatives à une caractéristique biométrique d'un opérateur autorisé pouvant être détectée par le capteur biométrique (304),
dans lequel le circuit de commande (305) est adapté pour mettre en œuvre un procédé selon l'une quelconque des revendications précédentes.
